# EUROPÄISCHE PATENTSCHRIFT

(11) **EP 3 132 655 B1**
(45) Veröffentlichungstag und Bekanntmachung des Hinweises auf die Patenterteilung: **22.04.2020**
(21) Anmeldenummer: 15707666.2
(22) Anmeldetag: 05.03.2015
(51) Int. Cl.: H05B 3/84, H05B 3/86, B05D 1/28, B32B 17/10

(54) **TRANSPARENTE SCHEIBE MIT HEIZBESCHICHTUNG**
TRANSPARENT DISC WITH THERMAL COATING
PLAQUE TRANSPARENTE AVEC REVÊTEMENT THERMIQUE

(30) Priorität: 17.04.2014 EP 14165080
(43) Veröffentlichungstag der Anmeldung: 22.02.2017
(73) Patentinhaber: Saint-Gobain Glass France, 92400 Courbevoie (FR)
(72) Erfinder: DIMITRIJEVIC, Bojan, 44803 Bochum (DE); SCHULZ, Valentin, 52382 Niederzier (DE); SCHALL, Günther, 52372 Kreuzau (DE)
(74) Vertreter: Gebauer, Dieter Edmund
(86) Internationale Anmeldenummer: PCT/EP2015/054556
(87) Internationale Veröffentlichungsnummer: WO 2015/158461

(56) Entgegenhaltungen:
- EP-A1- 2 334 141
- WO-A1-2012/031907
- FR-A1- 2 592 544
- GB-A- 2 381 179
- US-A1- 2012 103 961

## Beschreibung

Die Erfindung betrifft eine transparente Scheibe mit einer elektrisch heizbaren Beschichtung.

Transparente Scheiben mit einer elektrischen Heizschicht sind als solche wohl bekannt und bereits vielfach in der Patentliteratur beschrieben worden. Lediglich beispielhaft sei in diesem Zusammenhang auf die deutsche Offenlegungsschriften DE 102008018147 A1 und DE 102008029986 A1 verwiesen. In Kraftfahrzeugen werden sie häufig als Windschutzscheiben eingesetzt, da das zentrale Sichtfeld aufgrund gesetzlicher Vorgaben, mit Ausnahme von Heizdrähten, keinerlei Sichteinschränkungen aufweisen darf. Durch die von der Heizschicht erzeugte Wärme können binnen kurzer Zeit kondensierte Feuchtigkeit, Eis und Schnee entfernt werden. Meist werden solche Scheiben als Verbundscheiben hergestellt, in denen 2 Einzelscheiben durch eine thermoplastische Klebeschicht miteinander verbunden sind. Die Heizschicht kann auf eine der inneren Oberflächen der Einzelscheiben aufgebracht sein, wobei aber auch Aufbauten bekannt sind, bei denen sie sich auf einem Träger befindet, der zwischen den beiden Einzelscheiben angeordnet ist.

Die Heizschicht ist in der Regel mit mindestens einem Paar streifen- bzw. bandförmiger Sammelelektroden ("Busbars") elektrisch verbunden, die den Heizstrom möglichst gleichmäßig in die Beschichtung einleiten und auf breiter Front verteilen sollen. Für eine ansprechende ästhetische Erscheinung der Scheibe werden die undurchsichtigen Sammelelektroden durch opake Maskierungsstreifen verdeckt.

Allgemein kann die spezifische Heizleistung P_{spec} einer heizbaren Beschichtung durch die Formel P_{spec} = U²/(R□·D²) beschrieben werden, worin U die Speisespannung, R□ den elektrischen Flächenwiderstand der Beschichtung und D den Abstand zwischen den beiden Sammelelektroden darstellen. Der Flächenwiderstand R□ der Beschichtung liegt bei den derzeit in der industriellen Serienfertigung eingesetzten Materialien in der Größenordnung von einigen Ohm pro Flächeneinheit (Ω/□).

Um mit der in Kraftfahrzeugen standardmäßig zur Verfügung stehenden Bordspannung von 12 bis 24 V eine für den gewünschten Zweck zufriedenstellende Heizleistung zu erzielen, sollten die Sammelelektroden einen möglichst geringen Abstand D voneinander haben. In Anbetracht der Tatsache, dass der Widerstand R der heizbaren Beschichtung mit der Länge des Strompfads zunimmt und da die Fahrzeugscheiben in der Regel breiter als hoch sind, sind die Sammelelektrode normalerweise entlang des oberen und unteren Scheibenrands angeordnet, so dass der Heizstrom über den kürzeren Weg der Scheibenhöhe fließen kann.

Nun schirmen Scheiben mit einer elektrischen Heizschicht elektromagnetische Strahlung relativ stark ab, so dass insbesondere in Kraftfahrzeugen mit einer heizbaren Windschutzscheibe der Funkdatenverkehr erheblich beeinträchtigt sein kann. Heizbare Windschutzscheiben werden deshalb häufig mit beschichtungsfreien Zonen ("Kommunikations- oder Sensorfenster") versehen, die zumindest für bestimmte Bereiche des elektromagnetischen Spektrums gut durchlässig sind, um auf diese Weise einen reibungslosen Datenverkehr zu ermöglichen. Die beschichtungsfreien Zonen, an denen sich häufig elektronische Einrichtungen, wie Sensoren und dergleichen befinden, sind gewöhnlich in der Nähe des oberen Scheibenrands angeordnet, wo sie vom oberen Maskierungsstreifen gut verdeckt werden können.

Jedoch beeinträchtigen beschichtungsfreie Zonen die elektrischen Eigenschaften der Heizschicht, was sich zumindest lokal auf die Stromdichteverteilung des durch die Heizschicht fließenden Heizstroms auswirkt. Tatsächlich verursachen sie eine stark inhomogene Heizleistungsverteilung, bei der die Heizleistung unterhalb und in der Umgebung der beschichtungsfreien Zonen deutlich verringert ist. Andererseits treten Stellen mit einer besonders hohen Stromdichte auf ("Hot Spots"), in denen die Heizleistung stark erhöht ist. In der Folge können sehr hohe lokale Scheibentemperaturen auftreten, die eine Gefahr für Verbrennungen darstellen und den Scheiben große thermische Spannungen auferlegen. Zudem können sich dadurch Klebstellen von Anbauteilen lösen.

Die Fachwelt hat versucht, diese Probleme durch die Formgebung des Heizfelds und/oder der Sammelleitungen und/oder den Einbau einer dritten Sammelleitung zu beheben.

So ist beispielsweise aus der britischen Patentanmeldung GB 2381179 A eine beheizbare Windschutzscheibe bekannt, deren Heizschicht in mindestens zwei Felder oder Zonen aufgeteilt ist, die durch unbeschichtete Bereiche voneinander getrennt sind. Das beschichtungsfreie Kommunikationsfenster befindet sich in der zentralen Zone der Beschichtung. Die im eingebauten Zustand obere Sammelleitung wird um drei Ränder (horizontaler unterer Rand und die zwei parallel zueinander verlaufende vertikale Seitenränder) des Kommunikationsfensters geführt. Die längs der beiden Seitenränder verlaufenden Teilstrecken der Sammelleitung werden durch die beiden unbeschichteten Bereiche, die die zentrale Zone von den beiden seitlich davon liegenden Zonen trennen, geführt.

Aus der internationalen Patentanmeldung WO 2011/006743 A1 ist eine beheizbare Windschutzscheibe bekannt, die auf einem transparenten Substrat eine elektrisch leitfähige Beschichtung, zwei elektrische Sammelbänder, mindestens einen örtlich begrenzten, von der Beschichtung abgegrenzten Bereich und innerhalb dieses Bereichs einen beschichtungsfreien Bereich als Kommunikationsfenster aufweist. Der abgegrenzte Bereich ist durch mindestens zwei parallel zu Äquipotenziallinien verlaufende, über mindestens einen ohmschen Widerstand verbundene Stromsammelbereiche auf der Beschichtung und mindestens zwei parallel zu elektrischen Feldlinien verlaufende, elektrisch isolierende Trennlinien zumindest teilweise begrenzt.

Aus der europäischen Patentanmeldung EP 2 334 141 A1 ist ebenfalls eine beschichtete Scheibe mit einem beheizbaren Kommunikationsfenster bekannt. In dem beschichtungsfreien Bereich des Kommunikationsfensters ist mindestens ein Heizleiter mit zwei Polen aufgebracht, wobei der erste Pol mit der elektrisch leitfähigen transparenten Beschichtung elektrisch verbunden ist und der zweite Pol mit der besagten Beschichtung oder einem Stromsammelband elektrisch verbunden ist.

Aus den internationalen Patentanmeldungen WO 2012/031907 A1 und WO 2012/031908 A1 ist ebenfalls eine transparente Scheibe mit einer elektrisch heizbaren Beschichtung bekannt, die mit mindestens zwei zum elektrischen Verbindungen mit den beiden Polen einer Spannungsquelle vorgesehenen ersten Elektroden elektrisch verbunden ist, so dass durch Anlegen einer Speisespannung ein Heizstrom über ein zwischen den beiden ersten Elektroden gebildetes Heizfeld fließt. Dabei weist das Heizfeld mindestens eine beschichtungsfreie Zone als Kommunikationsfenster auf, die von einem zumindest abschnittsweise von einem von der heizbaren Beschichtung gebildeten Zonenrand begrenzt wird. Die Scheibe weist des Weiteren eine zweite Elektrode auf, die zum Verbinden mit dem einen Pol der Spannungsquelle vorgesehen ist. Diese zweite Elektrode verfügt über wenigstens einen zumindest abschnittsweise in der beschichtungsfreien Zone angeordneten Zuleitungsabschnitt und einen oder mehrere mit dem Zuleitungsabschnitt verbundene Anschlussabschnitte. Dabei erstrecken sich die Anschlussabschnitte jeweils ausgehend von der beschichtungsfreien Zone über einen Randabschnitt des Zonenrand hinweg. Der Randabschnitt wird von einem Abschnitt des Heizfelds gebildet, der sich zwischen der beschichtungsfreien Zone und der zur Verbindung mit dem anderen Pol der Spannungsquelle vorgesehenen ersten Elektrode befindet. In einer Ausführungsform besteht der Zuleitungsabschnitt aus mindestens zwei voneinander getrennten Zuleitungsteilen, die jeweils einen Kopplungsadapter aufweisen, der mit der heizbaren Beschichtung elektrisch verbunden ist. Dabei sind die beiden Kopplungsabschnitte so angeordnet, dass sie durch die heizbare Beschichtung galvanisch gekoppelt sind.

Diese bekannten Konfigurationen beheizbarer Scheiben haben bereits einen beträchtlichen Fortschritt mit sich gebracht. Indes können die bekannten Konfigurationen die vorstehend geschilderten Probleme der lokalen Überhitzung nicht bei beheizbaren Scheiben zur Zufriedenheit lösen, die ein besonders großes Kommunikationsfenster und/oder ein geometrisch besonders anspruchsvolles Design der schwarzen Randbeschichtung aufweisen.

Demgegenüber besteht die Aufgabe der vorliegenden Erfindung darin, die bekannten gattungsgemäßen Scheiben so weiterzubilden, dass die Scheiben mit einer zumindest annähernd gleichmäßigen Heizleistungsverteilung beheizbar ist und keine durch neue, geometrisch besonders anspruchsvolle Designs der schwarzen Randbeschichtung und/oder durch besonders große Kommunikationsfenster hervorgerufene Hot Spots mehr aufweisen. Diese und weitere Aufgaben werden nach dem Vorschlag der Erfindung durch eine transparente Scheibe mit den Merkmalen des unabhängigen Patentanspruchs gelöst. Vorteilhafte Ausgestaltungen der Erfindung sind durch die Merkmale der Unteransprüche angegeben.

In einer vorteilhaften Ausgestaltung der erfindungsgemäßen Scheibe ist die Oberfläche der ersten Scheibe, auf der die elektrisch beheizbare Beschichtung angeordnet ist, über eine thermoplastische Zwischenschicht mit einer zweiten Scheibe flächig verbunden ist

Als erste und gegebenenfalls zweite Scheibe sind im Grunde alle elektrisch isolierenden Substrate geeignet, die unter den Bedingungen der Herstellung und der Verwendung der erfindungsgemäßen Scheibe thermisch und chemisch stabil sowie dimensionsstabil sind.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die erste Scheibe und/oder die zweite Scheibe sind bevorzugt transparent, insbesondere für die Verwendung der Scheibe als Windschutzscheide oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich >70 % aufweist. Für Scheiben, die nicht im verkehrsrelevanten Sichtfeld des Fahrers liegen, beispielsweise für Dachscheiben, kann die Transmission aber auch viel geringer sein, beispielsweise >5 %.

Die Dicke der erfindungsgemäßen Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die erste Scheibe und gegebenenfalls die zweite Scheibe weisen beispielsweise im Fahrzeugbau und Architekturbereich übliche Flächen von 200 cm² bis zu 20 m² auf.

Die erfindungsgemäße Scheibe kann eine beliebige dreidimensionale Form aufweisen. Vorzugsweise hat die dreidimensionale Form keine Schattenzonen, so dass sie beispielsweise durch Kathodenzerstäubung beschichtet werden kann. Bevorzugt sind die Substrate planar oder leicht oder stark in einer Richtung oder in mehreren Richtungen des Raumes gebogen. Insbesondere werden planare Substrate verwendet. Die Scheiben können farblos oder gefärbt sein.

Mehrere Scheiben werden durch mindesten eine Zwischenschicht miteinander verbunden. Die Zwischenschicht enthält vorzugsweise mindestens einen thermoplastischen Kunststoff, bevorzugt Polyvinylbutyral (PVB), Ethylenvinylacetat (EVA) und / oder Polyethylenterephthalat (PET). Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharze, Acrylate, fluorinierte Ethylen-Propylene, Polyvinylfluorid und / oder Ethylen-Tetrafluorethylen, oder Copolymere oder Gemische davon enthalten. Die thermoplastische Zwischenschicht kann durch eine oder auch durch mehrere übereinander angeordnete thermoplastische Folien ausgebildet werden, wobei die Dicke ein thermoplastischen Folie bevorzugt von 0,25 mm bis 1 mm beträgt, typischerweise 0,38 mm oder 0,76 mm.

Bei einer erfindungsgemäßen Verbundscheibe aus einer ersten Scheibe, einer Zwischenschicht und einer zweiten Scheibe kann die elektrisch beheizbare Beschichtung direkt auf der erste Scheibe aufgebracht sein oder auf eine Trägerfolie oder auf die Zwischenschicht selbst aufgebracht sein. Die erste Scheibe und die zweite Scheibe weisen jeweils eine innenseitige Oberfläche und eine außenseitige Oberfläche auf. Die innenseitigen Oberflächen der ersten und der zweiten Scheibe sind einander zugewandt und über die thermoplastische Zwischenschicht miteinander verbunden. Die außenseitigen Oberflächen der ersten und der zweiten Scheibe sind voneinander und von der thermoplastischen Zwischenschicht abgewandt. Die elektrisch leitfähige Beschichtung ist auf der innenseitigen Oberfläche der ersten Scheibe aufgebracht. Natürlich kann auch auf der innenseitigen Oberfläche der zweiten Scheibe eine weitere elektrisch leitfähige Beschichtung aufgebracht sein. Auch die außenseitigen Oberflächen der Scheiben können Beschichtungen aufweisen. Die Begriffe "erste Scheibe" und "zweite Scheibe" sind zur Unterscheidung der beiden Scheiben bei einer erfindungsgemäßen Verbundscheibe gewählt. Mit den Begriffen ist keine Aussage über die geometrische Anordnung verbunden. Ist die erfindungsgemäße Scheibe beispielsweise dafür vorgesehen, in einer Öffnung, beispielsweise eines Fahrzeugs oder eines Gebäudes, den Innenraum gegenüber der äußeren Umgebung abzutrennen, so kann die ersten Scheibe dem Innenraum oder der äußeren Umgebung zugewandt sein.

Die erfindungsgemäße Scheibe umfasst eine elektrisch leitfähige, beheizbare, transparente Beschichtung, die sich zumindest über einen wesentlichen Teil der Scheibenfläche, insbesondere über deren Sichtfeld, erstreckt. Die elektrisch beheizbare Beschichtung ist mit mindestens zwei, insbesondere zwei, zum elektrischen Verbinden mit den beiden Polen einer Spannungsquelle vorgesehenen Sammelelektroden elektrisch so verbunden, dass durch Anlegen einer Speisespannung ein Heizstrom über ein zwischen den beiden Sammelelektroden geformtes Heizfeld fließt. Typischerweise sind die beiden Sammelelektroden jeweils in Form einer streifen- oder bandförmigen Elektrode oder Sammelschiene oder Busbar zum Einleiten und breiten Verteilen des Stroms in der beheizbaren Beschichtung ausgebildet. Zu diesem Zweck sind sie mit der Heizschicht galvanisch verbunden.

In einer vorteilhaften Ausgestaltung ist die Sammelelektrode als aufgedruckte und eingebrannte leitfähige Struktur ausgebildet. Die aufgedruckte Sammelelektrode enthält bevorzugt zumindest ein Metall, eine Metalllegierung, eine Metallverbindung und/oder Kohlenstoff, besonders bevorzugt ein Edelmetall und insbesondere Silber. Die Druckpaste zur Herstellung der Sammelelektrode enthält bevorzugt metallische Partikel Metallpartikel und/oder Kohlenstoff und insbesondere Edelmetallpartikel wie Silberpartikel. Die elektrische Leitfähigkeit wird bevorzugt durch die elektrisch leitenden Partikel erzielt. Die Partikel können sich in einer organischen und/oder anorganischen Matrix wie Pasten oder Tinten befinden, bevorzugt als Druckpaste mit Glasfritten.

Die Schichtdicke der aufgedruckten Sammelelektrode beträgt bevorzugt von 5 µm bis 40 µm, besonders bevorzugt von 8 µm bis 20 µm und ganz besonders bevorzugt von 8 µm bis 12 µm. Aufgedruckte Sammelelektroden mit diesen Dicken sind technisch einfach zu realisieren und weisen eine vorteilhafte Stromtragfähigkeit auf.

Der spezifische Widerstand ρₐ der Sammelelektrode beträgt bevorzugt von 0.8 µOhm•cm bis 7.0 µOhm•cm und besonders bevorzugt von 1.0 µOhm•cm bis 2.5 µOhm•cm. Sammelelektroden mit spezifischen Widerständen in diesem Bereich sind technisch einfach zu realisieren und weisen eine vorteilhafte Stromtragfähigkeit auf.

Alternativ kann die Sammelelektrode aber auch als Streifen einer elektrisch leitfähigen Folie ausgebildet sein. Die Sammelelektrode enthält dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 µm bis 500 µm, besonders bevorzugt von 30 µm bis 300 µm. Sammelelektroden aus elektrisch leitfähigen Folien mit diesen Dicken sind technisch einfach zu realisieren und weisen eine vorteilhafte Stromtragfähigkeit auf. Der Streifen kann mit der elektrisch leitfähigen Struktur beispielsweise über eine Lotmasse, über einen elektrisch leitfähigen Kleber oder durch direktes Auflegen elektrisch leitend verbunden sein.

Die elektrisch leitfähige, beheizbare Beschichtung der erfindungsgemäßen Scheibe lässt sich in ein Heizfeld, d.h. den beheizbaren Teil der elektrisch beheizbaren Beschichtung, der sich zwischen den beiden Sammelelektroden befindet, so dass ein Heizstrom eingeleitet werden kann, und einen Bereich außerhalb des erwähnten Heizfelds unterteilen.

Elektrisch beheizbare Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionelle Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten der beheizbaren Beschichtung zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Die dielektrische Schicht kann aber auch mehrere Einzelschichten umfassen, beispielsweise Einzelschichten eines dielektrischen Materials, Glättungsschichten, Anpassungsschichten, Blockerschichten und / oder Antireflexionsschichten. Die Dicke einer dielektrischen Schicht beträgt beispielsweise von 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Weitere geeignete elektrisch leitfähige Beschichtungen enthalten bevorzugt Indium-Zinnoxid (ITO), fluordotiertes Zinnoxid (SnO₂:F) oder aluminiumdotiertes Zinkoxid (ZnO:Al).

Die beheizbare Beschichtung kann prinzipiell jede Beschichtung sein, die elektrisch kontaktiert werden soll. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent. Die beheizbare Beschichtung ist bevorzugt für elektromagnetische Strahlung transparent, besonders bevorzugt für elektromagnetische Strahlung einer Wellenlänge von 300 bis 1300 nm und insbesondere für sichtbares Licht.

In einer vorteilhaften Ausgestaltung ist die beheizbare Beschichtung eine Schicht oder ein Schichtaufbau mehrerer Einzelschichten mit einer Gesamtstärke von kleiner oder gleich 2 µm, besonders bevorzugt kleiner oder gleich 1 µm.

Eine vorteilhafte beheizbare Beschichtung weist einen Flächenwiderstand von 0,4 Ω/□ bis 10 Ω/□ auf. In einer besonders bevorzugten Ausgestaltung weist die erfindungsgemäße elektrisch leitfähige Beschichtung einen Flächenwiderstand von 0,5 Ω/□ bis 1 Ω/□ auf. Beschichtungen mit derartigen Flächenwiderständen eignen sich besonders zur Beheizung von Fahrzeugscheiben bei typischen Bordspannungen von 12 V bis 48 Volt oder bei Elektrofahrzeugen mit typischen Bordspannungen von bis zu 500 V.

Die beheizbare Beschichtung kann sich über die gesamte Oberfläche der ersten Scheibe erstrecken. Die beheizbare Beschichtung kann sich alternativ aber auch nur über einen Teil der Oberfläche der ersten Scheibe erstrecken. Die beheizbare Beschichtung erstreckt sich bevorzugt über mindestens 50%, besonders bevorzugt über mindestens 70% und ganz besonders bevorzugt über mindestens 90% der innenseitigen Oberfläche der ersten Scheibe.

In einer vorteilhaften Ausgestaltung einer erfindungsgemäßen Scheibe als Verbundscheibe weist die innenseitige Oberfläche der ersten Scheibe einen umlaufenden Randbereich mit einer Breite von 2 mm bis 50 mm, bevorzugt von 5 mm bis 20 mm auf, der nicht mit der elektrisch leitfähigen Beschichtung versehen ist. Die elektrisch leitfähige Beschichtung weist dann keinen Kontakt zur Atmosphäre auf und ist im Inneren der Scheibe durch die thermoplastische Zwischenschicht vorteilhaft vor Beschädigungen und Korrosion geschützt.

In der erfindungsgemäßen Scheibe enthält das Heizfeld zumindest eine beschichtungsfreie Zone, in der keine beheizbare Beschichtung vorhanden ist. Die beschichtungsfreie Zone wird von einem zumindest abschnittsweise von der beheizbaren Beschichtung gebildeten Zonenrand begrenzt.

Insbesondere verfügt die beschichtungsfreie Zone über einen umlaufenden Zonenrand, der vollständig von der beheizbaren Beschichtung gebildet wird.

Indes kann der Zonenrand in den umlaufenden Beschichtungsrand der beheizbaren Beschichtung übergehen, so dass die beschichtungsfreie Zone direkt mit dem die Scheibenränder umlaufenden, beschichtungsfreien Randstreifen der erfindungsgemäßen Scheibe verbunden ist.

Die beschichtungsfreie Zone kann die unterschiedlichsten Umrisse aufweisen. So kann der Umriss quadratisch, rechteckig, trapezförmig, dreieckig, fünfeckig, sechseckig, siebeneckig oder achteckig mit abgerundeten Ecken und/oder gebogenen Kanten sowie kreisförmig, oval, tropfenförmig oder elliptisch sein. Die Umrisslinien können einen geradlinigen, wellenförmigen, zickzackförmigen und/oder sägezahnförmigen Verlauf haben. Mehrere dieser geometrischen Merkmale können bei ein und derselben beschichtungsfreien Zone verwirklicht sein.

Insbesondere dient die beschichtungsfreie Zone als Kommunikationsfenster, das für elektromagnetische Strahlung, insbesondere IR-Strahlung, Radarstrahlung und/oder Funkstrahlung, durchlässig ist. Außerdem können in dem Kommunikationsfenster auch Sensoren, beispielsweise Regensensoren, platziert werden.

Die beschichtungsfreie Zone kann beispielsweise durch Maskierung beim Aufbringen der Heizschicht auf ein Substrat oder durch Entfernen der Heizschicht beispielsweise durch mechanischen und/oder chemischen Abtrag und/oder durch Abtrag durch Bestrahlung mit elektromagnetischer Strahlung, insbesondere Laserlichtbestrahlung, nach dem Aufbringen der elektrisch beheizbaren Beschichtung hergestellt werden.

Nach dem Vorschlag der Erfindung zeichnet sich die transparente Scheibe in wesentlicher Weise dadurch aus, dass sie zumindest eine, insbesondere eine, zum elektrischen Verbinden mit dem einen Pol der Spannungsquelle vorgesehene Zusatzelektrode oder dritte Busbar aufweist, die zumindest abschnittsweise, insbesondere nur mit einem Elektrodenabschnitt, in der beschichtungsfreien Zone angeordnet und mit der elektrisch beheizbaren Beschichtung elektrisch so verbunden ist, dass bei Anlegen einer Speisespannung ein Teil des Heizstroms über einen Heizfeldabschnitt des Heizfelds fließt, der sich zwischen der Zusatzelektrode oder der beschichtungsfreien Zone und der zur Verbindung mit dem anderen Pol der Spannungsquelle vorgesehenen Sammelelektrode befindet.

Vorzugsweise ist mindestens eine der Zusatzelektroden oder die eine Zusatzelektrode in mindestens zwei, insbesondere zwei, voneinander getrennte Teilbereiche untergliedert.

Vorzugsweise erstreckt sich die mindestens eine Zusatzelektrode oder erstrecken sich die mindestens zwei voneinander getrennten Teilbereiche der Zusatzelektrode längs des im eingebauten Zustand der erfindungsgemäßen unteren Zonenrands der mindestens einen beschichtungsfreien Zone. "Längs" bedeutet, dass die Zusatzelektrode oder ihre Teilbereiche nahezu parallel oder exakt parallel zu dem unteren Zonenrand verlaufen.

Ist die Zusatzelektrode oder ihre mindestens zwei voneinander getrennten Teilbereiche in der beschichtungsfreien Zone derart angeordnet, dass die Fläche zwischen dem Zonenrand des Heizfelds und der Zusatzelektrode oder ihrer Teilbereiche noch beschichtungsfrei ist, wird die elektrische Verbindung der Zusatzelektrode mit dem Heizfeldabschnitt mithilfe von mindestens zwei, vorzugsweise von mindestens drei, bevorzugt von mindestens vier und insbesondere von mindestens fünf Anschlussabschnitten bewerkstelligt. Ist die Zusatzelektrode in mindestens zwei, insbesondere zwei, voneinander getrennte Teilbereiche untergliedert, verfügt oder verfügen mindestens ein Teilbereich, insbesondere alle Teilbereiche, über mindestens zwei, vorzugsweise mindestens drei, bevorzugt mindestens vier und insbesondere mindestens fünf Anschlussabschnitte.

Die Anschlussabschnitte können die Form gerader oder Biegungen aufweisender Streifen haben, deren Länge größer als ihre Breite ist.

Die Anschlussabschnitte können aber auch von Ausbuchtungen und/oder Vorsprüngen der Zusatzelektrode oder ihrer Teilbereiche gebildet werden, wenn diese beispielsweise wellenförmig, zickzackförmig oder mäanderförmig verläuft oder verlaufen, so dass sie das Heizfeld abschnittsweise berühren.

Die Anschlussabschnitte erstrecken sich von der Zusatzelektrode oder ihren voneinander getrennten Teilbereichen in den Heizfeldabschnitt des Heizfelds zwischen der Zusatzelektrode oder ihren Teilbereichen und der entgegengesetzt elektrisch geladenen Sammelelektrode, insbesondere der im eingebauten Zustand der erfindungsgemäßen Scheibe unteren Sammelelektrode.

Vorzugsweise erfolgt die elektrische Verbindung der Zusatzelektrode oder der mindestens zwei voneinander getrennten Teilbereiche der Zusatzelektrode mit dem einen Pol der Spannungsquelle über eine der beiden Sammelelektroden, insbesondere über die im eingebauten Zustand der erfindungsgemäßen Scheibe obere Sammelelektrode.

Erfindungsgemäß ist mindestens eine, insbesondere eine, der beiden Sammelelektroden in mindestens zwei, insbesondere zwei, voneinander getrennte Teilbereiche untergliedert. Von jedem der mindestens zwei, insbesondere zwei, Teilbereiche der jeweiligen Sammelelektrode führt jeweils mindestens eine, insbesondere eine, Stromversorgungsleitung zu der mindestens einen, insbesondere einen, Zusatzelektrode.

Indes kann jeder der mindestens zwei, insbesondere zwei, voneinander getrennten Teilbereiche der mindestens einen, insbesondere einen, Sammelelektrode über mindestens eine, insbesondere eine, Stromversorgungsleitung mit jeweils mindestens einem, insbesondere einem, Teilbereich der Zusatzelektrode elektrisch verbunden werden. Dabei erfolgt die galvanische Verbindung oder Kopplung zwischen den Teilbereichen der Zusatzelektrode über den Heizfeldabschnitt des Heizfelds zwischen der Zusatzelektrode oder ihren Teilbereichen und der entgegengesetzt elektrisch geladenen Sammelelektrode, insbesondere der im eingebauten Zustand der erfindungsgemäßen Scheibe unteren Sammelelektrode.

Erfindungsgemäß ist oder sind mindestens eine, insbesondere alle, Stromversorgungsleitungen zumindest abschnittsweise
- in einem beschichtungsfreien Randstreifen, insbesondere in dem beschichtungsfreien Randstreifen, der der Sammelelektrode unmittelbar benachbart ist,
- in mindestens einem Teilbereich, insbesondere in mindestens zwei Teilbereichen, der elektrisch beheizbaren Beschichtung außerhalb des Heizfelds, insbesondere den Teilbereichen, die den Sammelelektroden unmittelbar benachbart sind,
angeordnet.

Erfindungsgemäß wird jeder der beiden Teilbereiche von einer Stromversorgungsleitung auf der vom Heizfeld abgewandten Seite der Sammelelektrode kontaktiert.

Die Erfindung betrifft weiterhin eine transparente Scheibe mit mindestens einer elektrisch beheizbaren Beschichtung, die mit mindestens zwei zum elektrischen Verbinden mit den beiden Polen einer Spannungsquelle vorgesehenen Sammelelektroden so verbunden ist, dass durch Anlegen einer Speisespannung ein Heizstrom über ein zwischen den beiden Sammelelektroden gebildetes Heizfeld fließt, wobei das Heizfeld zumindest eine beschichtungsfreie Zone enthält, welche von einem zumindest abschnittsweise von der beheizbaren Beschichtung gebildeten Zonenrand der beschichtungsfreien Zone begrenzt wird, wobei
- mindestens eine der beiden Sammelelektroden in mindestens zwei voneinander getrennte Teilbereiche untergliedert ist,
- von jedem der mindestens zwei Teilbereiche mindestens eine Stromversorgungsleitung zu mindestens einer Zusatzelektrode geführt ist, wobei die mindestens eine Stromversorgungsleitung zumindest abschnittsweise in der mindestens einen beschichtungsfreien Zone verläuft, wobei die mindestens eine Stromversorgungsleitung eine Seitenkante des Teilbereichs kontaktiert, wobei die beiden Seitenkanten der beiden Teilbereiche einander zugewandt sind, und wobei
- die mindestens eine Zusatzelektrode mit den Enden der mindestens zwei Stromversorgungsleitungen und mit dem Heizfeldabschnitt des Heizfelds zwischen den Sammelelektroden elektrisch verbunden ist und/oder
- die mindestens eine Zusatzelektrode in mindestens zwei voneinander getrennte Teilbereiche untergliedert ist, wobei jeder der mindestens zwei Teilbereiche mit jeweils einem Ende mindestens einer Stromversorgungsleitung sowie mit dem Heizfeldabschnitt des Heizfelds zwischen den Sammelelektroden elektrisch verbunden ist.

Vorzugsweise ist mindestens eine der Stromversorgungsleitungen oder sind insbesondere alle Stromversorgungsleitungen überwiegend oder ganz in dem beschichtungsfreien Randstreifen und/oder der mindestens einen beschichtungsfreien Zone angeordnet.

"Überwiegend" bedeutet, dass die Stromversorgungsleitungen nur eine kurze Strecke, bevorzugt nur auf einer Strecke von 5 bis <50%, besonders bevorzugt 5 bis 40 % und insbesondere 5 bis 30% ihrer Gesamtlänge, auf oder in den Teilbereichen der Beschichtung außerhalb des Heizfelds verlaufen.

Bevorzugt verlaufen dabei die Stromversorgungsleitungen abschnittsweise durch den im eingebauten Zustand der erfindungsgemäßen Scheibe oberen Bereich der beschichtungsfreien Zone oder, sofern mindestens eine weitere beschichtungsfreie Zone nahe, insbesondere oberhalb der ersten beschichtungsfreien Zone, angeordnet ist, durch diese weitere beschichtungsfreien Zone.

Besonders bevorzugt verlaufen dabei die Stromversorgungsleitungen abschnittsweise durch den oberen Bereich der beschichtungsfreien Zone, der sich direkt an den umlaufenden beschichtungsfreien Randstreifen anschließt.

Bevorzugt erstrecken sich desweiteren die mindestens zwei Stromversorgungsleitungen abschnittsweise längs der im eingebauten Zustand der transparenten Scheibe seitlichen Zonenränder der mindestens einen beschichtungsfreien Zone, wobei "längs" die vorstehend angegebene Bedeutung hat. Insbesondere haben die mindestens zwei Stromversorgungsleitungen auf diesen Strecken keinen elektrischen Kontakt mit dem Zonenrand der Beschichtung, insbesondere mit dem vom Heizfeld gebildeten Zonenrand.

Die Länge der Stromversorgungsleitungen kann breit variieren und daher hervorragend den Erfordernissen des Einzelfalls angepasst werden.

Desgleichen kann die Breite der Stromversorgungsleitungen breit variieren und ebenfalls hervorragend den Erfordernissen des Einzelfalls angepasst werden.

Die Stromversorgungsleitungen können abschnittsweise geradlinig, gebogen, wellenförmig, zickzackförmig und/oder mäanderförmig verlaufen.

Erfindungsgemäß werden Länge und die Breite sowie die Form, insbesondere die Länge und die Breite, der Stromversorgungsleitungen im Einzelfall so ausgewählt, dass die Zusatzelektrode oder ihre Teilbereiche eine solche Spannung aufweist oder aufweisen, dass sich in dem ihnen und der beschichtungsfreien Zone benachbarten Bereichen des Heizfelds und Heizfeldabschnitts der beheizbaren Beschichtung eine Temperatur einstellt, die nur geringfügig, vorzugsweise nur 5 bis 50 °C, insbesondere nur 5 bis 40 °C, und idealerweise gar nicht von der Temperatur der übrigen beheizten Beschichtung abweicht.

Genauer gesagt, wird einerseits durch die Länge der Zusatzelektrode das elektrische Potenzial, insbesondere an der Verbindungsstelle zum Heizfeld so eingestellt, dass möglichst viel Strom über die Zusatzelektrode fließt. Andererseits darf nur so viel Strom fließen, dass die Zusatzelektrode und deren direkte Umgebung nicht überhitzten, um die Bildung von Hot-Spots zu vermeiden. So könnte das elektrische Potenzial bzw. der elektrische Widerstand der Zusatzelektrode theoretisch auch nur über ihre Breite entsprechend angepasst werden. In diesem Fall käme es aber zu dem Problem, dass der gesamte Spannungsabfall nur über eine sehr kurze Zusatzelektrode abgebaut werden müsste, was zu einer Überhitzung der Zusatzelektrode selbst führen würde. Dieses Problem kann indes erfindungsgemäß durch möglichst lange Stromversorgungsleitungen gelöst werden, die die Überhitzung verhindern.

Vorzugsweise bestehen die Stromversorgungsleitungen aus denselben elektrisch leitfähigen Materialien wie die Sammelelektroden.

Insgesamt wird durch die erfindungsgemäße Anordnung von Sammelelektrode, Zusatzelektrode und Stromversorgungsleitungen eine annähernd homogene Verteilung der Heizleistung bewirkt und die Bildung von Stellen mit verringerter oder erhöhter Heizleistung (Hot Spots) wirksam verhindert.

Somit kann auch durch die erfindungsgemäße Anordnung im Bereich der beschichtungsfreien Zone der erfindungsgemäßen Scheibe die Bildung von Rückständen aus Eis und/oder kondensiertem Wasser wirksam verhindert werden.

Die Sammelelektroden werden durch eine oder mehrere Zuleitungen elektrisch kontaktiert. Die Zuleitung ist bevorzugt als flexibler Folienleiter oder Flachleiter oder Flachbandleiter ausgebildet. Darunter wird ein elektrischer Leiter verstanden, dessen Breite deutlich größer ist als seine Dicke. Ein solcher Flachleiter ist beispielsweise ein Streifen oder Band enthaltend oder bestehend aus Kupfer, verzinntem Kupfer, Aluminium, Silber, Gold oder Legierungen davon. Der Flachleiter weist beispielsweise eine Breite von 2 mm bis 16 mm und eine Dicke von 0,03 mm bis 0,1 mm auf. Der Flachleiter kann eine isolierende, bevorzugt polymere Ummantelung, beispielsweise auf Polyimid-Basis aufweisen. Flachleiter, die sich zur Kontaktierung von elektrisch leitfähigen Beschichtungen in Scheiben eignen, weisen lediglich eine Gesamtdicke von beispielsweise 0,3 mm auf. Derart dünne Flachleiter können ohne Schwierigkeiten zwischen den einzelnen Scheiben in der thermoplastischen Zwischenschicht eingebettet werden. In einem Flachleiterband können sich mehrere voneinander elektrisch isolierte, leitfähige Schichten befinden.

Alternativ können auch dünne Metalldrähte als elektrische Zuleitung verwendet werden. Die Metalldrähte enthalten insbesondere Kupfer, Wolfram, Gold, Silber oder Aluminium oder Legierungen mindestens zweier dieser Metalle. Die Legierungen können auch Molybdän, Rhenium, Osmium, Iridium, Palladium oder Platin enthalten.

In der erfindungsgemäßen Scheibe sind die mindestens zwei Teilbereiche der mindestens einen Sammelelektrode über mindestens ein elektrisch leitfähiges Verbindungsteil mit mindestens einem an eine Spannungsquelle angeschlossenen Flachleiter elektrisch leitend verbunden. Dabei sind der mindestens eine Flachleiter und das mindestens eine Verbindungsteil von den mindestens zwei Stromversorgungsleitungen elektrisch isoliert angeordnet.

Der Flachleiter kann mit dem Verbindungsteil durch einen flachen Metallstreifen, insbesondere Kupferstreifen, verbunden sein.

Die elektrische Isolierung kann durch die räumliche Trennung erfolgen, indem jedem Teilbereich der mindestens einen Sammelelektrode ein an eine gemeinsame Spannungsquelle angeschlossener Flachleiter zugeordnet ist.

In einer Ausführungsform der erfindungsgemäßen Scheibe können indes zwei Teilbereiche der mindestens einen Sammelelektrode über ein gemeinsames Verbindungsteil mit nur einem Flachleiter elektrisch leitend verbunden sein. In diesem Falle wird die elektrische Isolierung zwischen dem Flachleiter und dem Verbindungsteil einerseits und den mindestens zwei Stromversorgungsleitungen andererseits mittels einer elektrisch isolierenden Schicht, insbesondere mittels einer streifenförmigen, elektrisch isolierenden Schicht, zwischen dem Flachleiter und dem Verbindungsteil einerseits und den mindestens zwei Stromversorgungsleitungen andererseits bewerkstelligt. Die elektrisch isolierende Schicht, insbesondere die streifenförmige, elektrisch isolierende Schicht, bedeckt zumindest die Kreuzungspunkte des Verbindungsteils mit den mindestens zwei Stromversorgungsleitungen.

Vorzugsweise weist diese Anordnung insgesamt einen schichtförmigen Aufbau aus den folgenden übereinander liegenden Schichten auf:
- eine Scheibe,
- von der Isolierung bedeckte Abschnitte der Stromversorgungsleitungen,
- den Stromversorgungsleitungen benachbarte Teilbereiche der Beschichtung außerhalb des Heizfelds, an deren Zonenränder die einander gegenüberliegenden Kanten der elektrisch isolierenden Schicht anstoßen,
- ein der elektrisch isolierenden Schicht aufliegende Flachleiter
- Teilbereiche der Sammelelektrode sowie
- das mit ihnen elektrisch verbundene Verbindungsteil.

Ein wesentlicher Vorteil dieser Anordnung ist, dass nur noch ein Flachleiter zur Versorgung von zwei Teilbereichen einer Sammelelektrode benötigt wird, was die Herstellung der erfindungsgemäßen Scheibe wesentlich vereinfacht.

In einer bevorzugten Ausführungsform der erfindungsgemäßen Scheibe sind die Bereiche, in denen die Sammelelektroden, der oder die Flachleiter, die Zusatzelektrode oder die Zusatzelektroden, die Stromversorgungsleitungen sowie die beschichtungsfreien Zonen angeordnet sind, teilweise oder in Gänze durch übliche und bekannte, opake oder undurchsichtige Maskierungsstreifen optisch maskiert. Vorzugsweise sind die Maskierungsstreifen schwarz gefärbt. Vorzugsweise werden die Vorprodukte der Maskierungsstreifen durch Siebdruck auf die noch unbeschichteten Scheiben aufgetragen, wonach die aufgetragenen Schichten eingebrannt werden.

Die erfindungsgemäßen Scheiben können in üblicher und bekannter Weise hergestellt werden. Vorzugsweise werden sie mithilfe des nachfolgenden Verfahrens, welches nicht Teil der Erfindung ist, hergestellt.

Das Verfahren umfasst die folgenden Verfahrensschritte:
(A) Herstellen einer elektrisch heizbaren Beschichtung,
(B) Herstellen mindestens einer beschichtungsfreien Zone in der Beschichtung und im Heizfeld,
(C) Ausbilden von mindestens zwei mit den beiden Polen einer Spannungsquelle vorgesehenen Sammelelektroden, die mit der elektrisch heizbaren Beschichtung elektrisch verbunden sind, so dass durch Anlegen einer Speisespannung ein Heizstrom über ein zwischen den beiden Sammelelektroden befindliches Heizfeld fließt, wobei mindestens eine der beiden Sammelelektroden in mindestens zwei voneinander getrennte Teilbereiche untergliedert ausgeführt wird,
(D) Herstellen mindestens einer zum elektrischen Verbinden mit mindestens einer der beiden Sammelelektroden vorgesehenen Zusatzelektrode und/oder mindestens zwei voneinander getrennten Teilbereichen der mindestens einen Zusatzelektrode und
(E) Herstellen mindestens zweier Stromversorgungsleitungen die die mindestens eine Zusatzelektrode und/oder jeweils einen ihrer mindestens zwei Teilbereiche elektrisch mit jeweils mindestens einem der mindestens zwei voneinander getrennten Teilbereiche mindestens einer der Sammelelektroden verbinden, wobei mindestens eine der mindestens zwei Stromversorgungsleitungen zumindest abschnittsweise
   - in der mindestens einen beschichtungsfreien Zone und/oder
   - in dem beschichtungsfreien Randstreifen und/oder
   - in mindestens einem Teilbereich der Beschichtung außerhalb des Heizfelds und/oder
   - am und/oder im von der Beschichtung gebildeten Zonenrand der mindestens einen beschichtungsfreien Zone
verlaufend hergestellt wird.

Bei einer besonders bevorzugten Ausführungsform des Verfahrens werden die Verfahrensschritte (C), (D) und (E) gleichzeitig durchgeführt. Vorzugsweise wird hierbei ein Siebdruckverfahren verwendet.

Im einzelnen kann das Aufbringen der elektrisch leitfähigen, beheizbaren Beschichtung im Verfahrensschritt (A) durch an sich bekannte Verfahren erfolgen, bevorzugt durch magnetfeldunterstützte Kathodenzerstäubung. Das ist besonders vorteilhaft im Hinblick auf eine einfache, schnelle, kostengünstige und gleichmäßige Beschichtung der ersten Scheibe, wenn die erfindungsgemäße Scheibe als Verbundscheibe ausgestaltet ist. Die elektrisch leitfähige, beheizbare Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die erste Scheibe kann nach Verfahrensschritt (A) einer Temperaturbehandlung unterzogen werden. Dabei wird die erste Scheibe mit der elektrisch leitfähigen, beheizbaren Beschichtung auf eine Temperatur von mindestens 200°C, bevorzugt mindestens 300°C erwärmt. Die Temperaturbehandlung kann der Erhöhung der Transmission und/oder der Verringerung des Flächenwiderstands der elektrisch leitfähigen Beschichtung dienen.

Die erste Scheibe kann nach Verfahrensschritt (A) gebogen werden, typischerweise bei einer Temperatur von 500 °C bis 700 °C. Da es technisch einfacher ist, eine plane Scheibe zu beschichten, ist dieses Vorgehen vorteilhaft, wenn die erste Scheibe gebogen werden soll. Alternativ kann die erste Scheibe aber auch vor Verfahrensschritt (A) gebogen werden, beispielsweise wenn die elektrisch leitfähige Beschichtung nicht dazu geeignet ist, einen Biegeprozess ohne Beschädigungen zu überstehen.

Das Aufbringen der Sammelelektroden in Verfahrensschritt (C) und der Stromversorgungsleitungen in Verfahrensschritt (E) erfolgt bevorzugt durch Aufdrucken und Einbrennen einer elektrisch leitfähigen Paste in einem Siebdruckverfahren oder in einem Inkjet-Verfahren. Alternativ können die Sammelelektroden und die Stromversorgungsleitungen als Streifen einer elektrisch leitfähigen Folie auf die elektrisch leitfähige, beheizbare Beschichtung aufgebracht, bevorzugt aufgelegt, angelötet oder angeklebt werden.

Bei Siebdruckverfahren erfolgt die laterale Formgebung durch die Maskierung des Gewebes, durch das die Druckpaste mit den Metallpartikeln gedrückt wird. Durch eine geeignete Formgebung der Maskierung kann beispielsweise die Breite der Sammelelektrode besonders einfach vorgegeben und variiert werden.

Die beschichtungsfreien Zonen werden im Verfahrensschritte (B) bevorzugt durch mechanisches Abtragen der im Verfahrensschritt (A) hergestellten heizbaren Beschichtung hergestellt. Das mechanische Abtragen kann auch durch die Behandlung mit geeigneten Chemikalien und/oder durch die Bestrahlung mit elektromagnetischer Strahlung ersetzt oder ergänzt werden.

Eine vorteilhafte Weiterbildung des Verfahrens umfasst mindestens die folgenden weiteren Schritte:
- Anordnen einer thermoplastischen Zwischenschicht auf der beschichteten Oberfläche der ersten Scheibe und Anordnen einer zweiten Scheibe auf der thermoplastischen Zwischenschicht und
- Verbinden der ersten Scheibe und der zweiten Scheibe über die thermoplastische Zwischenschicht.

In diesen Verfahrensschritten wird die erste Scheibe so angeordnet, dass diejenige ihrer Oberflächen, welche mit der heizbaren Beschichtung versehen ist, der thermoplastischen Zwischenschicht zugewandt ist. Die Oberfläche wird dadurch zur innenseitigen Oberfläche der ersten Scheibe.

Die thermoplastische Zwischenschicht kann durch eine einzelne oder auch durch zwei oder mehrere thermoplastische Folien, die flächenmäßig übereinander angeordnet werden, ausgebildet werden.

Das Verbinden von erster und zweiter Scheibe erfolgt bevorzugt unter Einwirkung von Hitze, Vakuum und/oder Druck. Es können an sich bekannte Verfahren zur Herstellung einer Scheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumringverfahren arbeiten beispielsweise bei etwa 200 mbar und 80 °C bis 110 °C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander- und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Die erfindungsgemäße Scheibe kann hervorragend als funktionales und/oder dekoratives Einzelstück und/oder als Einbauteil in Möbeln, Geräten und Gebäuden sowie in Fortbewegungsmitteln zur Fortbewegung auf dem Lande, in der Luft oder zu Wasser, insbesondere in Kraftfahrzeugen beispielsweise als Windschutzscheibe, Heckscheibe, Seitenscheibe und/oder Glasdach verwendet werden. Vorzugsweise ist die erfindungsgemäße Scheibe als Fahrzeug-Windschutzscheibe oder Fahrzeug-Seitenscheibe ausgeführt.

Es versteht sich, dass die vorstehend genannten und nachstehend näher erläuterten Merkmale nicht nur in den angegebenen Kombinationen und Konfigurationen, sondern auch in anderen Kombinationen und Konfigurationen oder in Alleinstellung einsetzbar sind, ohne den Rahmen der vorliegenden Erfindung zu verlassen.

### Kurze Beschreibung der Zeichnungen

Die Erfindung wird nun anhand von Ausführungsbeispiele näher erläutert, wobei Bezug auf die beigefügten Figuren genommen wird. Es zeigen in vereinfachter, nicht in maßstäblicher Darstellung:
- Figur 1: eine Draufsicht einer beispielhaften Ausgestaltung der erfindungsgemäßen Windschutzscheibe;
- Figur 2: eine Draufsicht einer weiteren beispielhaften Ausgestaltung der erfindungsgemäßen Windschutzscheibe;
- Figur 3: eine Draufsicht einer weiteren beispielhaften Ausgestaltung der erfindungsgemäßen Windschutzscheibe;
- Figur 4: eine Draufsicht auf den wesentlichen Ausschnitt aus einer weiteren beispielhaften Ausgestaltung der erfindungsgemäßen Windschutzscheibe;
- Figur 5: eine Darstellung eines vertikalen Schnitts durch einen Ausschnitt der erfindungsgemäßen Windschutzscheibe gemäß den Figuren 1 bis 4;
- Figur 6: eine perspektivische Schnittdarstellung eines Ausschnitts der Windschutzscheibe gemäß den Figuren 1 bis 4;
- Figur 7: eine Darstellung eines vertikalen Schnitts durch einen Ausschnitt der erfindungsgemäßen Windschutzscheibe gemäß der Figur 1;

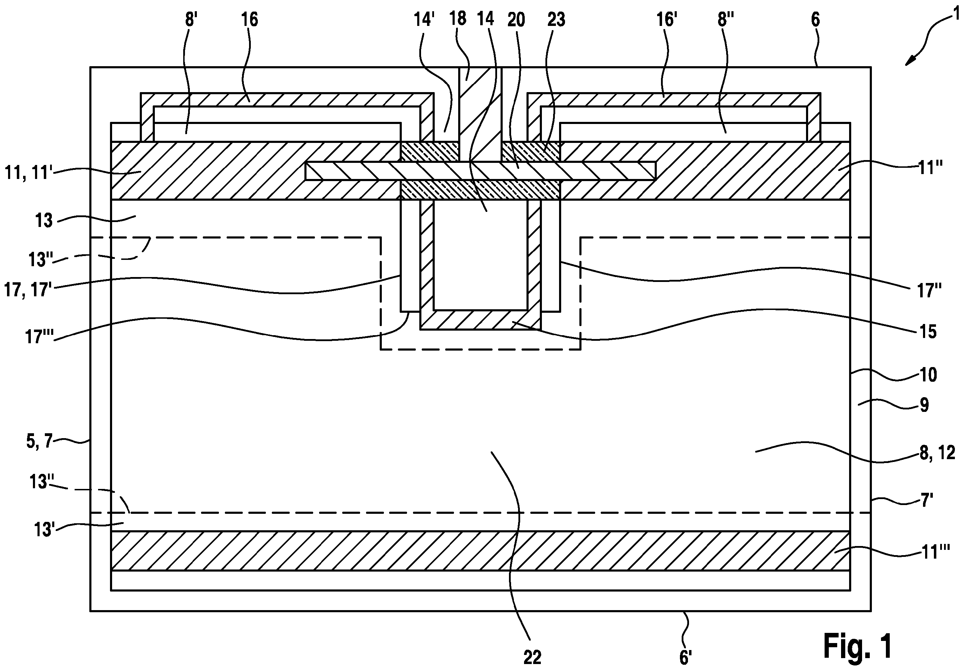

In den Figuren 1 bis 7 haben die Bezugszeichen die folgende Bedeutung:
- 1: Windschutzscheibe
- 2: Außenscheibe
- 3: Innenscheibe
- 4: Klebeschicht
- 5: Scheibenrand
- 6, 6': erste Seite
- 7, 7': zweite Seite
- 8: Beschichtung
- 8', 8": Teilbereich der Beschichtung 8 außerhalb des Heizfelds 12
- 9: beschichtungsfreier Randstreifen
- 10: Beschichtungsrand
- 11, 11"': Sammelelektrode
- 11', 11": Teilbereich der Sammelelektrode 11
- 12: Heizfeld zwischen den Sammelelektroden 11 und 11"'
- 13, 13': Maskierungsstreifen
- 13": Rand des Markierungsstreifens
- 14: beschichtungsfreie Zone
- 14': im eingebauten Zustand der Windschutzscheibe 1 oberer Bereich der beschichtungsfreien Zone 14
- 14": im eingebauten Zustand der Windschutzscheibe 1 unterer Bereich der beschichtungsfreien Zone 14
- 15: Zusatzelektrode
- 15', 15": Teilbereich der Zusatzelektrode 15
- 16, 16': Stromversorgungsleitung
- 17: von der beheizbaren Beschichtung 8 gebildeter Zonenrand der beschichtungsfreien Zone 14
- 17', 17": im eingebauten Zustand der Windschutzscheibe 1 seitlicher Zonenrand der beschichtungsfreien Zone 14
- 17"': im eingebauten Zustand der Windschutzscheibe 1 unterer Zonenrand der beschichtungsfreien Zone 14
- 17"": im eingebauten Zustand der Windschutzscheibe 1 oberer Zonenrand der beschichtungsfreien Zone 14
- 18, 18': Flachleiter zu einem Pol einer Spannungsquelle
- 19, 19': Kupferverbindung zwischen Flachleiter 18, 18' und Verbindungsteil 20, 20' zur Sammelelektrode 11, 11'
- 20, 20': Verbindungsteil zwischen Flachleiter 18 oder Kupferverbindung 19, 19' und den Teilbereichen 11' und 11" Sammelelektrode 11
- 21, 21': Anschlussabschnitt
- 22: Heizfeldabschnitt des Heizfeldes 12 zwischen Zusatzelektrode 15 oder ihren Teilbereichen 15' und 15" und Sammelelektrode 11'"
- 23: elektrisch isolierende Schicht

### Ausführliche Beschreibung der Zeichnungen

**Figur 1**

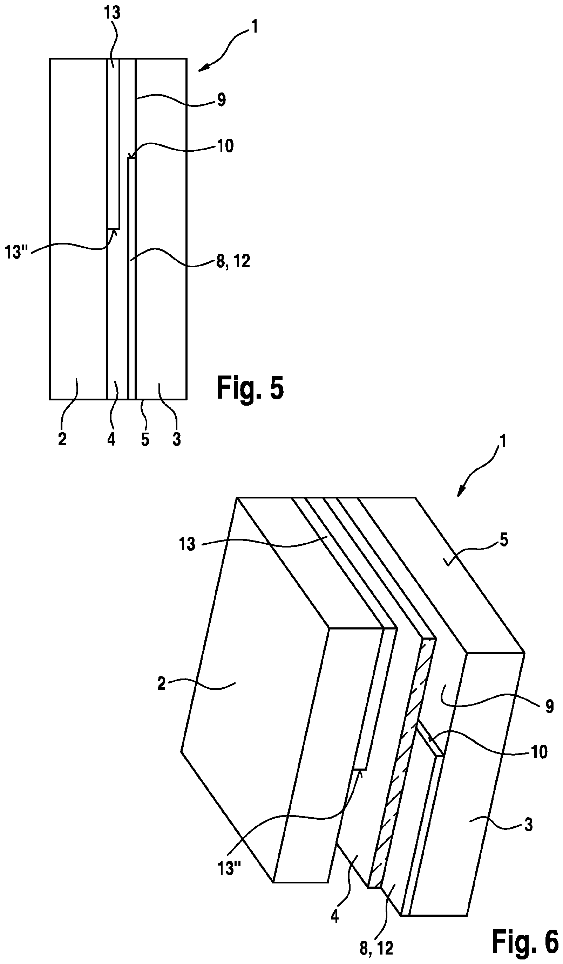

Die Figur 1 zeigt eine transparente Windschutzscheibe 1 eines Kraftfahrzeugs von der Innenseite her gesehen. Die Windschutzscheibe 1 ist hier beispielsweise als Verbundglasscheibe ausgeführt, deren Aufbau anhand der Darstellung eines vertikalen Schnitts durch einen Ausschnitt der Windschutzscheibe 1 in der Figur 5 und anhand der perspektivischen Schnittdarstellung eines Ausschnitts der Windschutzscheibe 1 in der Figur 6 veranschaulicht wird.

Demnach umfasst die Windschutzscheibe 1 zwei starre Einzelscheiben, nämlich eine Außenscheibe 2 und eine Innenscheibe 3, die durch eine thermoplastische Klebeschicht 4, hier beispielsweise eine Polyvinylbutyralfolie (PVB), eine Ethylen-Vinylacetat-Folie (EVA) oder eine Polyurethanfolie (PU) haftfest miteinander verbunden sind. Die beiden Einzelscheiben 2, 3 sind in etwa von gleicher Größe und Form und können beispielsweise eine trapezförmig geschwungene Kontur haben, was in den Figuren nicht näher dargestellt ist. Sie sind beispielsweise aus Glas gefertigt, wobei sie auch aus einem nichtgläsernen Material wie Kunststoff aufgebaut sein können. Für andere Anwendungen als Windschutzscheiben wäre es auch möglich, die beiden Einzelscheiben 2, 3 aus einem flexiblen Material herzustellen. Die Kontur der Windschutzscheibe 1 ergibt sich durch einen den beiden Einzelscheiben 2, 3 gemeinsamen Scheibenrand 5, wobei die Windschutzscheibe 1 oben und unten über zwei einander gegenüber liegende erste Seiten 6, 6' sowie links und rechts über zwei einander gegenüberliegende zweite Seiten 7, 7' verfügt.

Wie in den Figuren 5 und 6 dargestellt, ist auf der mit der Klebeschicht 4 verbundenen Seite der Innenscheibe 3 eine transparente, elektrisch beheizbare Beschichtung 8 abgeschieden. Die beheizbare Beschichtung 8 ist hier beispielsweise im Wesentlichen vollflächig auf der Innenscheibe 3 aufgebracht, wobei ein allseitig umlaufender Randstreifen 9 nicht beschichtet ist, so dass ein Beschichtungsrand 10 der heizbaren Beschichtung 8 gegenüber dem Scheibenrand 5 nach innen rückversetzt ist. Hierdurch wird eine elektrische Isolierung der beheizbaren Beschichtung 8 nach außen bewirkt. Zudem wird die beheizbare Beschichtung 8 gegen vom Scheibenrand 5 vordringende Korrosion geschützt.

Die beheizbare Beschichtung 8 umfasst in bekannter Weise eine nicht dargestellte Schichtenfolge mit mindestens einer elektrisch beheizbaren, metallischen Teilschicht, vorzugsweise Silber, und gegebenenfalls weiteren Teilschichten wie Entspiegelungs- und Blockerschichten. Vorteilhaft ist die Schichtenfolge thermisch hoch belastbar, so dass sie die zum Biegen der Glasscheiben erforderlichen Temperaturen von typischerweise mehr als 600 °C ohne Beschädigung übersteht, wobei aber auch thermisch gering belastbare Schichtenfolgen vorgesehen sein können. Die beheizbare Beschichtung 8 kann gleichermaßen als metallische Einzelschicht aufgebracht sein. Ebenso ist denkbar, die beheizbare Beschichtung 8 nicht direkt auf die Innenscheibe 3 aufzubringen, sondern diese zunächst auf einem Träger, beispielsweise eine Kunststofffolie, aufzubringen, der anschließend mit der Außen- und Innenscheibe 2, 3 verklebt wird. Alternativ kann die Trägerfolie mit Klebefolien (z.B. PVB-Folien) verbunden und als Dreischichtenanordnung (Trilayer) mit Innen- und Außenscheibe 2, 3 verklebt werden. Die beheizbare Beschichtung 8 wird vorzugsweise durch Sputtern oder Magnetron-Kathodenzerstäubung auf die Innen- oder Außenscheibe 2, 3 aufgebracht.

Wie in der Figur 1 dargestellt, ist die beheizbare Beschichtung 8 angrenzend an die ersten Seiten 6, 6', d.h. am oberen und unteren Scheibenrand 5, mit einer bandförmigen oberen Sammelelektrode oder Busbar 11 und einer bandförmigen unteren Sammelelektrode 11"' elektrisch leitend verbunden und zu diesem Zweck mit den beiden Sammelelektroden 11, 11'" beispielsweise galvanisch gekoppelt. Die obere Sammelelektrode 11 ist zur Verbindung mit dem einen Pol einer nicht dargestellten Spannungsquelle vorgesehen. Die beiden Sammelelektroden 11, 11'" gegensätzlicher Polarität dienen für eine gleichmäßige Einleitung und Verteilung des Heizstroms in das zwischen ihnen befindliche Heizfeld 12 der beheizbaren Beschichtung 8. Die beiden Sammelelektroden 11, 11"' sind beispielsweise auf die elektrisch beheizbare Beschichtung 8 gedruckt und haben jeweils einen zumindest annähernd geradlinigen Verlauf.

Erfindungsgemäß ist die obere Sammelelektrode 11 in zwei voneinander getrennte Teilbereiche 11' und 11" untergliedert.

Von jedem der beiden Teilbereiche 11', 11" verlaufen jeweils eine Stromversorgungsleitung 16, 16' zu einer Zusatzelektrode 15. Dabei verlaufen die Stromversorgungsleitungen 16, 16' auf einer kurzen Strecke durch die außerhalb der Heizschicht 12 gelegenen Teilbereiche 8', 8" oberhalb der beiden Teilbereiche 11' und 11". Danach verlaufen die Stromversorgungsleitungen 16, 16' auf einer längeren Strecke durch den an die obere Seite 6 der Windschutzscheibe 1 angrenzenden beschichtungsfreien Randstreifen 9 bis zum oberen Bereich 14' der beschichtungsfreien Zone 14. Von dort laufen die beiden Stromversorgungsleitungen 16, 16' innerhalb der beschichtungsfreien Zone 14 längs der von der beheizbaren Beschichtung 8 gebildeten seitlichen Zonenränder 17', 17" zu der Zusatzelektrode 15, die am unteren Zonenrand 17"' der beschichtungsfreien Zone 14 derart angeordnet ist, dass sie mit dem Heizfeldabschnitt 22 des Heizfelds 12 zwischen der Zusatzelektrode 15 und der unteren Sammelelektrode 11'" galvanisch gekoppelt ist.

Die beschichtungsfreie Zone hat hier beispielsweise eine zumindest annähernd rechteckige Kontur. Sie wird durch die Zonenränder 17', 17" und 17"' begrenzt. In ihrem oberen Bereich 14' geht sie in den beschichtungsfreien Randbereich 9 über. Sie ist zumindest für einen Teil des elektromagnetischen Spektrums (z.B. IR-Strahlung, Funkwellen im Ultrakurz-, Kurz- und Langwellenbereich) durchlässig, um einen reibungslosen Datenverkehr durch die Windschutzscheibe 1 zu ermöglichen. Die beschichtungsfreie Zone 14 kann beispielsweise durch vorheriges Maskieren beim Aufbringen der beheizbaren Beschichtung 8 auf die Innenscheibe 3 hergestellt werden. Alternativ kann sie nach Aufbringen der beheizbaren Beschichtung 8 auch durch chemischen und/oder mechanischen Abtrag beispielsweise mittels Ätzen oder Einsatz eines Reibrads hergestellt werden. Sie befindet sich innerhalb des Heizfelds 12 in der Nähe der Teilbereiche 11', 11" der oberen Sammelelektrode 11.

Die Teilbereiche 11', 11", die untere Sammelelektrode 11"', die Zusatzelektrode 15 und die Stromversorgungsleitungen 16, 16' können durch Aufdrucken beispielsweise mittels eines Siebdruckverfahrens einer metallischen Druckpaste, beispielsweise Silberdruckpaste, auf die Teilbereiche 8', 8" der beheizbaren Beschichtung 8, den beschichtungsfreien Randstreifen 9 und die beschichtungsfreie Zone 14, 14' vorzugsweise in einem Verfahrensschritt hergestellt werden.

Die elektrische Verbindung der beiden Teilbereiche 11', 11" mit dem einen Pol der nicht gezeigten Spannungsquelle wird über ein elektrisch leitfähiges, metallisches Verbindungsteil 20, das die beiden Teilbereiche 11', 11" mit einem üblichen und bekannten Flachleiter 18 verbindet, hergestellt. Die Anordnung aus Flachleiter 18 und Verbindungsteil 20 wird durch eine streifenförmige, elektrisch isolierende Schicht 23 von den darunter verlaufenden Abschnitten der Stromversorgungsleitungen 16, 16' elektrisch isoliert. Die streifenförmige, elektrisch isolierende Schicht 23 verläuft zwischen den beiden Teilbereichen 11', 11" und stößt an deren Endkanten an.

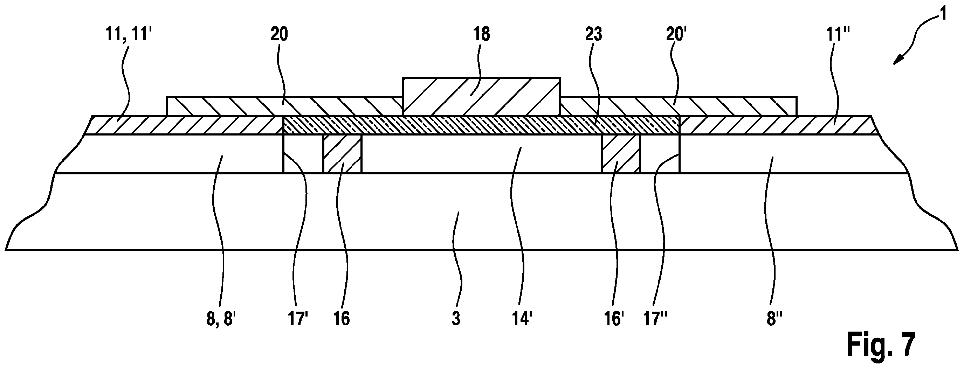

Diese Anordnung wird noch einmal anhand der Figur 7 veranschaulicht. Die Figur 7 zeigt einen vertikalen Schnitts durch die Anordnung aus Innenscheibe 3, Teilbereichen 8, 8', 8" mit den Zonenränder 17', 17", Teilbereichen 11', 11", streifenförmige, elektrisch isolierende Schicht 23, aufliegendem Flachleiter 18 und angrenzenden Teilbereichen 20, 20' des Verbindungsteils 20.

In einer weiteren Ausführungsform stößt die streifenförmige, elektrisch isolierende Schicht 23 nicht an die Endkanten der Teilbereiche 11', 11" an, sondern bedeckt nur die Kreuzungspunkte der Stromversorgungsleitungen 16, 16' mit den Verbindungsteilen 20, 20'.

Die Bereiche der Windschutzscheibe 1, worin sich die vorstehend beschriebenen funktionalen Elemente befinden, sowie Teile des Heizfelds 12 werden durch schwarze, opake Maskierungsstreifen 13, 13' mit den Rändern 13" verdeckt und dadurch optisch maskiert. Die Maskierungsstreifen dienen auch der Abschirmung von UV-Strahlung, die die Funktionen der elektrisch leitfähigen Elemente beeinträchtigen könnte.

**Figur 2**

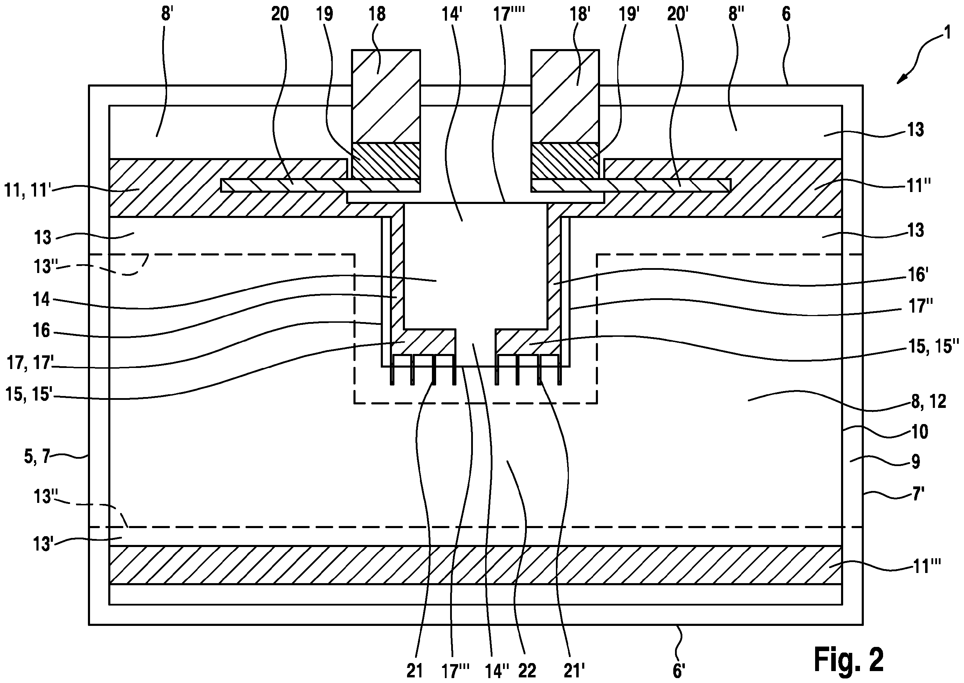

Die Figur 2 zeigt eine Draufsicht auf eine weitere Ausführungsform der erfindungsgemäßen Windschutzscheibe 1.

Die Ausführungsform gemäß der Figur 2 gleicht der Ausführungsform gemäß der Figur 1 mit den folgenden wesentlichen Unterschieden:
- Jeder der beiden Teilbereiche 11', 11" sind über jeweils ein elektrisch leitfähiges Verbindungsteil 20, 20' und flache, streifenförmige Verbindungen aus Kupfer 19, 19' mit jeweils einem Flachleiter 18, 18' verbunden. Die beiden Flachleiter 18, 18' sind mit einem Pol einer Spannungsquelle verbunden. Die Verbindungsteile 20, 20' und die beiden Flachleiter 18, 18' verlaufen abschnittsweise auf den Teilbereichen 8', 8" der beheizbaren Beschichtung 8. Die beiden streifenförmigen Verbindungen 19, 19' sind gänzlich in den Teilbereichen 8', 8"angeordnet.
- Von jedem der beiden Teilbereiche 11', 11" verläuft jeweils eine Stromversorgungsleitung 16, 16' eine kurze Strecke über die heizbare Beschichtung 8 in die beschichtungsfreie Zone 14. Innerhalb der beschichtungsfreien Zone 14 laufen jede der beiden Stromversorgungsleitungen 16, 16' längs der seitlichen Zonenränder 17', 17" zu jeweils einem Teilbereich 15, 15' der Zusatzelektrode 15. Diese Teilbereiche 15', 15" verlaufen innerhalb des unteren Bereichs beschichtungsfreien Zone 14" längs des unteren Zonenrands 17"'.
- Jede der beiden Teilbereiche 15', 15" sind über mehrere schmale streifenförmige Anschlussabschnitte 21, 21' mit dem Heizfeldabschnitt 22 des Heizfelds 12 galvanisch gekoppelt, so dass der Heizstrom gezielt in die angrenzenden Bereiche geleitet werden kann.

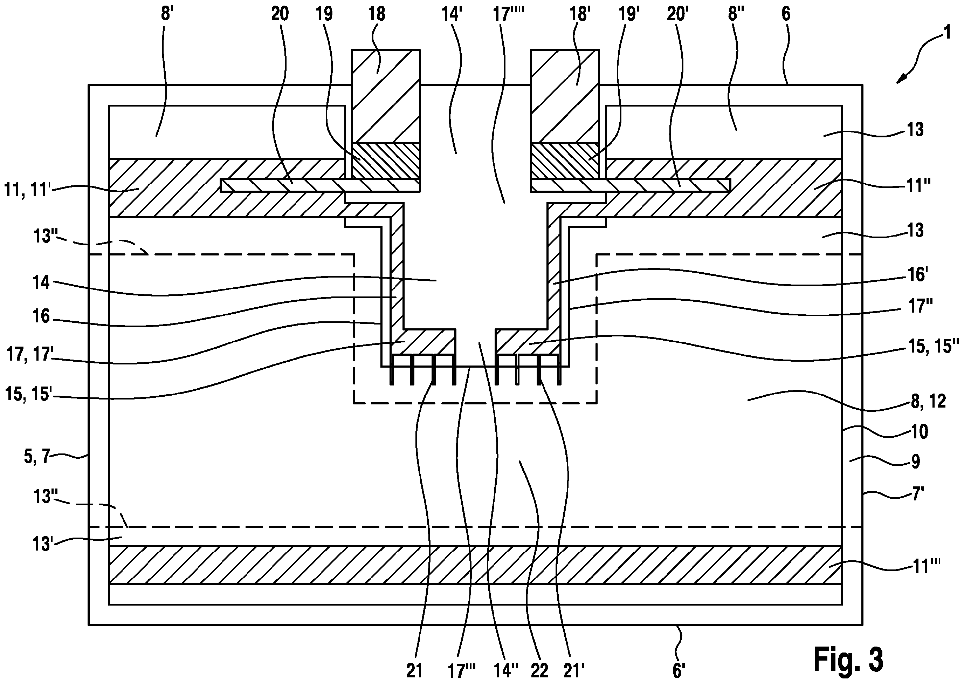

**Figur 3**
Die Ausführungsform gemäß der Figur 3 gleicht im Wesentlichen der Ausführungsform gemäß der Figur 2 mit dem wesentlichen Unterschied, dass die beiden Stromversorgungsleitungen 16, 16' unmittelbar von den Seitenkanten der Teilbereiche 11', 11" in den oberen Bereich 14' der beschichtungsfreien Zone 14 verlaufen. Dabei geht der obere Bereich 14' in den an der ersten Seite 6 befindlichen beschichtungsfreien Randstreifen 9 über, bzw. der betreffende Abschnitt des beschichtungsfreien Randstreifens 9 ist integraler Bestandteil des oberen Bereichs 14'. Der Vorteil dieser Ausführungsform gemäß Figur 3 ist, dass die Stromversorgungsleitungen 16, 16' keinen Kontakt mit der beheizbaren Beschichtung 8 haben.

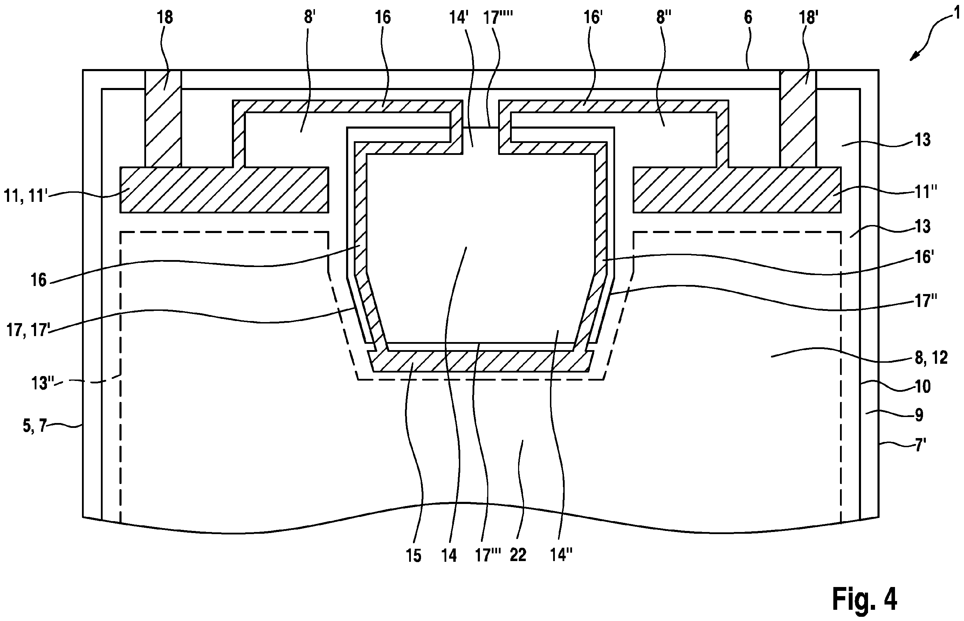

**Figur 4**
Die Ausführungsform der erfindungsgemäßen Windschutzscheibe 1 gemäß der Figur 4 (gezeigt ist nur der obere Abschnitt der Windschutzscheibe 1) unterscheidet sich von den Ausführungsformen der erfindungsgemäßen Windschutzscheibe 1 gemäß den Figuren 3 und 4 in den folgenden wesentlichen Merkmalen:
- Die beiden Flachleiter 18, 18' für die Teilbereiche 11', 11" sind im Bereich der Enden der Teilbereiche 11', 11", die den zweiten Seiten 7, 7' benachbart sind, angeordnet.
- Die Versorgungsleitungen 16, 16' verlaufen auf einer längeren Strecke über die Teilbereiche 8', 8" der beheizbaren Beschichtung 8 oberhalb der beiden Teilbereiche 11', 11" zu dem oberen Bereich 14' der beschichtungsfreien Zone 14.
- In der beschichtungsfreien Zone 14 verlaufen die beiden Versorgungsleitungen 16, 16' zunächst längs des oberen Zonenrands 17"' und von dort aus längs der seitlichen Zonenränder 17', 17" zu der Zusatzelektrode 15, die außerhalb des unteren Bereichs 14"der beschichtungsfreien Zone 14 unterhalb des unteren Zonenrands 17"' angeordnet ist, so dass sie mit dem Heizfeldabschnitt galvanisch gekoppelt ist.

## Patentansprüche

1. Transparente Scheibe (1) mit mindestens einer elektrisch beheizbaren Beschichtung (8), die mit mindestens zwei zum elektrischen Verbinden mit den beiden Polen einer Spannungsquelle vorgesehenen Sammelelektroden (11, 11'") so verbunden ist, dass durch Anlegen einer Speisespannung ein Heizstrom über ein zwischen den beiden Sammelelektroden (11,11"') gebildetes Heizfeld (12) fließt, wobei das Heizfeld (12) zumindest eine beschichtungsfreie Zone (14) enthält, welche von einem zumindest abschnittsweise von der beheizbaren Beschichtung (8) gebildeten Zonenrand (17) der beschichtungsfreien Zone (14) begrenzt wird, wobei
- mindestens eine der beiden Sammelelektroden (11, 11'") in mindestens zwei voneinander getrennte Teilbereiche (11', 11") untergliedert ist,
- von jedem der mindestens zwei Teilbereiche (11', 11") mindestens eine Stromversorgungsleitung (16, 16') zu mindestens einer Zusatzelektrode (15) geführt ist, wobei
- die mindestens zwei Stromversorgungsleitungen (16, 16') jeweils zumindest abschnittsweise
- in einem beschichtungsfreien Randstreifen (9) und/oder
- in mindestens einem Teilbereich (8', 8") der Beschichtung (8) außerhalb des Heizfelds (12) verlaufen, und wobei
- die mindestens eine Zusatzelektrode (15) mit den Enden der mindestens zwei Stromversorgungsleitungen (16, 16') und mit dem Heizfeldabschnitt (22) des Heizfelds (12) zwischen den Sammelelektroden (11,11'") elektrisch verbunden ist und/oder
- die mindestens eine Zusatzelektrode (15) in mindestens zwei voneinander getrennte Teilbereiche (15', 15") untergliedert ist, wobei jeder der mindestens zwei Teilbereiche (15', 15") mit jeweils einem Ende mindestens einer Stromversorgungsleitung (16, 16') sowie mit dem Heizfeldabschnitt (22) des Heizfelds (12) zwischen den Sammelelektroden (11, 11'") elektrisch verbunden ist,
**dadurch gekennzeichnet, dass** jeder der beiden Teilbereiche (11', 11") von einer Stromversorgungsleitung (16, 16') auf der vom Heizfeld (12) abgewandten Seite der Sammelelektrode (11', 11") kontaktiert wird.

2. Transparente Scheibe (1) nach Anspruch 1, wobei die mindestens zwei Stromversorgungsleitungen (16, 16') jeweils überwiegend oder ganz in dem beschichtungsfreien Randstreifen (9) angeordnet sind.

3. Transparente Scheibe (1) mit mindestens einer elektrisch beheizbaren Beschichtung (8), die mit mindestens zwei zum elektrischen Verbinden mit den beiden Polen einer Spannungsquelle vorgesehenen Sammelelektroden (11, 11'") so verbunden ist, dass durch Anlegen einer Speisespannung ein Heizstrom über ein zwischen den beiden Sammelelektroden (11,11"') gebildetes Heizfeld (12) fließt, wobei das Heizfeld (12) eine beschichtungsfreie Zone (14) enthält, welche von einem zumindest abschnittsweise von der beheizbaren Beschichtung (8) gebildeten Zonenrand (17) der beschichtungsfreien Zone (14) begrenzt wird, wobei
- mindestens eine der beiden Sammelelektroden (11, 11'") in mindestens zwei voneinander getrennte Teilbereiche (11', 11") untergliedert ist,
- von jedem der mindestens zwei Teilbereiche (11', 11") mindestens eine Stromversorgungsleitung (16, 16') zu mindestens einer Zusatzelektrode (15) geführt ist, und wobei
- die mindestens eine Zusatzelektrode (15) mit den Enden der mindestens zwei Stromversorgungsleitungen (16, 16') und mit dem Heizfeldabschnitt (22) des Heizfelds (12) zwischen den Sammelelektroden (11,11'") elektrisch verbunden ist und/oder
- die mindestens eine Zusatzelektrode (15) in mindestens zwei voneinander getrennte Teilbereiche (15', 15") untergliedert ist, wobei jeder der mindestens zwei Teilbereiche (15', 15") mit jeweils einem Ende mindestens einer Stromversorgungsleitung (16, 16') sowie mit dem Heizfeldabschnitt (22) des Heizfelds (12) zwischen den Sammelelektroden (11, 11'") elektrisch verbunden ist, **dadurch gekennzeichnet, dass** die mindestens zwei Stromversorgungsleitungen (16, 16') zumindest abschnittweise in der beschichtungsfreien Zone (14) verlaufen, dass die mindestens zwei Stromversorgungsleitungen (16, 16') Seitenkanten der Teilbereiche (11', 11") kontaktieren, und dass die beiden Seitenkanten der beiden Teilbereiche (11', 11") einander zugewandt sind.

4. Transparente Scheibe (1) nach Anspruch 3, wobei die mindestens zwei Stromversorgungsleitungen (16, 16') überwiegend oder ganz in der beschichtungsfreien Zone (14) angeordnet sind.

5. Transparente Scheibe (1) nach einem der Ansprüche 1 bis 4, **dadurch gekennzeichnet, dass** jeder der mindestens zwei Teilbereiche (11', 11") mindestens einer der Sammelelektroden (11, 11'") über mindestens einen Flachleiter (18) mit einer Spannungsquelle elektrisch verbunden ist.

6. Transparente Scheibe (1) nach Anspruch 5, **dadurch gekennzeichnet, dass** jeder der mindestens zwei Teilbereiche (11', 11") über mindestens einen Flachleiter (18, 18') mit einer gemeinsamen Spannungsquelle verbunden ist.

7. Transparente Scheibe (1) nach einem der Ansprüche 1 bis 6, **dadurch gekennzeichnet, dass** die mindestens eine Zusatzelektrode (15) und/oder mindestens ein Teilbereich (15', 15") der mindestens einen Zusatzelektrode (15) mindestens zwei Anschlussabschnitte (21, 21') aufweist, die sich in den Heizfeldabschnitt (22) des Heizfelds (12) zwischen der mindestens einen Zusatzelektrode (15) und/oder ihrer mindestens zwei Teilbereiche (15', 15") und mindestens einer Sammelelektrode (11, 11'") erstrecken.

8. Transparente Scheibe (1) nach einem der Ansprüche 1 bis 7, **dadurch gekennzeichnet, dass** die mindestens zwei Stromversorgungsleitungen (16, 16') abschnittsweise durch den im eingebauten Zustand der transparenten Scheibe (1) oberen Bereich (14') der beschichtungsfreien Zone (14) geführt sind.

9. Transparente Scheibe (1) nach einem der Ansprüche 1 bis 8, **dadurch gekennzeichnet, dass** sich die mindestens zwei Stromversorgungsleitungen (16, 16') abschnittsweise längs der im eingebauten Zustand der transparenten Scheibe (1) seitlichen Zonenränder (17', 17") der mindestens einen beschichtungsfreien Zone (14) oder beschichtungsfreien Zonen (14, 14') erstrecken.

10. Transparente Scheibe (1) nach einem der Ansprüche 1 bis 9, **dadurch gekennzeichnet, dass** sich die mindestens eine Zusatzelektrode (15) und/oder ihre mindestens zwei Teilbereiche (15', 15") längs des im eingebauten Zustand der transparenten Scheibe (1) unteren Zonenrands (17'") erstreckt oder erstrecken.

11. Transparente Scheibe (1) nach einem der Ansprüche 1 bis 10, **dadurch gekennzeichnet, dass** die mindestens zwei Teilbereiche (11', 11") mindestens einer der Sammelelektroden (11, 11'") über mindestens ein Verbindungsteil (20, 20') mit mindestens einem an eine Spannungsquelle angeschlossenen Flachleiter (18, 18') elektrisch leitend verbunden sind, wobei der mindestens eine Flachleiter (18, 18') und das mindestens eine Verbindungsteil (20, 20') von den mindestens zwei Stromversorgungsleitungen (16, 16') elektrisch isoliert angeordnet sind.

12. Transparente Scheibe (1) nach Anspruch 11, **dadurch gekennzeichnet, dass** zwei Teilbereiche (11', 11") über ein gemeinsames Verbindungsteil (20) mit einem Flachleiter (18) elektrisch leitend verbunden sind.

13. Transparente Scheibe (1) nach Anspruch 11 oder 12, **dadurch gekennzeichnet, dass** die elektrische Isolierung zwischen dem mindestens einen Flachleiter (18) und dem mindestens einen Verbindungsteil (20, 20') einerseits und den mindestens zwei Stromversorgungsleitungen (16, 16') andererseits mittels einer elektrisch isolierenden Schicht (23) zwischen dem mindestens einen Flachleiter (18) und dem mindestens einen Verbindungsteil (20, 20') einerseits und den mindestens zwei Stromversorgungsleitungen (16, 16') andererseits erfolgt.

## Claims

1. Transparent pane (1) having at least one electrically heatable coating (8), which is connected to at least two collecting electrodes (11, 11"') provided for the electrical connection to the two poles of a voltage source such that, by applying a supply voltage, a heating current flows via a heating field (12) formed between the two collecting electrodes (11,11"'), wherein the heating field (12) contains at least one coating-free zone (14), which is bordered by a zone edge (17) of the coating-free zone (14), which zone edge (17) is formed, at least in sections, by the heatable coating (8), wherein
- at least one of the two collecting electrodes (11, 11"') is subdivided into at least two subregions (11', 11") separated from one another,
- at least one electrical supply line (16, 16') is guided from each of the at least two subregions (11', 11") to at least one additional electrode (15), wherein
- the at least two electrical supply lines (16, 16') respectively run at least in sections
- in the coating-free edge strip (9) and/or
- in at least one subregion (8', 8") of the coating (8) outside the heating field (12), and wherein
- the at least one additional electrode (15) is electrically connected to the ends of the at least two electrical supply lines (16, 16') and to the heating field section (22) of the heating field (12) between the collecting electrodes (11,11"'), and/or
- the at least one additional electrode (15) is subdivided into at least two subregions (15', 15") separated from one another, wherein each of the at least two subregions (15', 15") is electrically connected to, in each case, one end of at least one electrical supply line (16, 16') as well as to the heating field section (22) of the heating field (12) between the collecting electrodes (11, 11"'),
**characterized in that** each of the two subregions (11', 11") is contacted by the electrical supply line (16, 16') at a side of the collecting electrodes (11, 11'") facing away from the heating field (12).

2. Transparent pane (1) according to claim 1, wherein the at least two electrical supply lines (16, 16') respectively are arranged predominantly or entirely in the coating-free edge strip (9).

3. Transparent pane (1) having at least one electrically heatable coating (8), which is connected to at least two collecting electrodes (11, 11'") provided for the electrical connection to the two poles of a voltage source such that, by applying a supply voltage, a heating current flows via a heating field (12) formed between the two collecting electrodes (11,11"'), wherein the heating field (12) contains at least one coating-free zone (14), which is bordered by a zone edge (17) of the coating-free zone (14), which zone edge (17) is formed, at least in sections, by the heatable coating (8), wherein
- at least one of the two collecting electrodes (11, 11"') is subdivided into at least two subregions (11', 11") separated from one another,
- at least one electrical supply line (16, 16') is guided from each of the at least two subregions (11', 11") to at least one additional electrode (15), and wherein
- the at least one additional electrode (15) is electrically connected to the ends of the at least two electrical supply lines (16, 16') and to the heating field section (22) of the heating field (12) between the collecting electrodes (11,11"'), and/or
- the at least one additional electrode (15) is subdivided into at least two subregions (15', 15") separated from one another, wherein each of the at least two subregions (15', 15") is electrically connected to, in each case, one end of at least one electrical supply line (16, 16') as well as to the heating field section (22) of the heating field (12) between the collecting electrodes (11, 11"'),
**characterized in that** the at least two electrical supply lines (16, 16') run, at least in sections, in the coating free zone (14), the at least two electrical supply lines (16, 16') contact side edges of the subregions (11', 11"), and both side edges of the subregions (11', 11") are facing each other.

4. Transparent pane (1) according to claim 3, wherein the at least two electrical supply lines (16, 16') each are arranged predominantly or entirely in the coating-free zone (14).

5. Transparent pane (1) according to one of claims 1 through 4, **characterized in that** each of the at least two subregions (11', 11") of at least one of the collecting electrodes (11, 11"') is electrically connected via at least one flat conductor (18) to a voltage source.

6. Transparent pane (1) according to claim 5, **characterized in that** each of the at least two subregions (11', 11") is connected via at least one flat conductor (18, 18') to a common voltage source.

7. Transparent pane (1) according to one of claims 1 through 6, **characterized in that** the at least one additional electrode (15) and/or at least one subregion (15', 15") of the at least one additional electrode (15) has at least two connection sections (21, 21'), which extend into the heating field section (22) of the heating field (12) between the at least one additional electrode (15) and/or its at least two subregions (15', 15") and at least one collecting electrode (11, 11"').

8. Transparent pane (1) according to one of claims 1 through 7, **characterized in that** the at least two electrical supply lines (16, 16') are guided in sections through the upper region (14') of the coating-free zone (14) in the installed state of the transparent pane (1).

9. Transparent pane (1) according to one of claims 1 through 8, **characterized in that** the at least two electrical supply lines (16, 16') extend in sections along the lateral zone edges (17', 17") of the at least one coating-free zone (14) or coating-free zones (14, 14') in the installed state of the transparent pane (1).

10. Transparent pane (1) according to one of claims 1 through 9, **characterized in that** the at least one additional electrode (15) and/or its least two subregions (15', 15") extend(s) along the lower zone edge (17"') in the installed state of the transparent pane (1).

11. Transparent pane (1) according to one of claims 1 through 10, **characterized in that** the at least two subregions (11', 11") of at least one of the collecting electrodes (11, 11"') are electrically conductively connected via at least one connecting part (20, 20') to at least one flat conductor (18, 18') connected to a voltage source, wherein the at least one flat conductor (18, 18') and the at least one connecting part (20, 20') are arranged electrically isolated from the at least two electrical supply lines (16, 16').

12. Transparent pane (1) according to claim 11, **characterized in that** two subregions (11', 11") are electrically conductively connected via a common connecting part (20) to a flat conductor (18).

13. Transparent pane (1) according to claim 11 or 12, **characterized in that** the electrical isolation between the at least one flat conductor (18) and the at least one connecting part (20, 20') on the one hand and the at least two electrical supply lines (16, 16') on the other is accomplished by means of an electrically insulating layer (23) between the at least one flat conductor (18) and the at least one connecting part (20, 20') on the one hand and the at least two electrical supply lines (16, 16') on the other.

## Revendications

1. Vitre transparente (1) avec au moins un revêtement (8) pouvant être chauffé électriquement qui est relié à au moins deux électrodes collectrices (11, 11"') prévues pour le raccordement électrique aux deux pôles d'une source de tension de telle manière qu'un champ de chauffage (12) formé entre les deux électrodes collectrices (11, 11"') circule lorsqu'une tension d'alimentation est appliquée, où le champ de chauffage (12) contient au moins une zone sans revêtement (14) qui est délimitée par une bordure (17) qui est formée au moins par sections, par le revêtement (14) (8) pouvant être chauffé de la zone sans revêtement (14), où
- au moins une des deux électrodes collectrices (11, 11'") est subdivisée en au moins deux zones partielles (11', 11") qui sont séparées l'une de l'autre,
- au moins une ligne d'alimentation (16, 16') est acheminée de chacune des au moins deux zones partielles (11', 11") vers au moins une électrode supplémentaire (15), où
- lesdites au moins deux lignes d'alimentation électrique (16, 16') s'étendent respectivement au moins par sections
- dans une bande latérale sans revêtement (9) et/ou
- dans au moins une zone partielle (8', 8") du revêtement (8) en dehors du champ de chauffage (12), et où
- ladite au moins une électrode supplémentaire (15) est reliée électriquement aux extrémités desdites au moins deux lignes d'alimentation électrique (16, 16') et à la section (22) de champ de chauffage du champ de chauffage (12) située entre les électrodes collectrices (11, 11"'), et/ou
- ladite au moins une électrode supplémentaire (15) est subdivisée en au moins deux zones partielles (15', 15") séparées l'une de l'autre, où chacune des au moins deux zones partielles (15', 15") est reliée électriquement à une extrémité d'au moins une ligne d'alimentation (16, 16') et à la section (22) de champ de chauffage du champ de chauffage (12) située entre les électrodes (11, 11'") collectrices,
**caractérisée en ce que** chacune des deux zones partielles (11', 11") est mise en contact par une ligne d'alimentation électrique (16, 16') sur la face de l'électrode collectrice (11', 11") éloigné du champ de chauffage (12).

2. Vitre transparente (1) selon la revendication 1, où les au moins deux lignes d'alimentation (16, 16') sont disposées respectivement en grande partie ou entièrement dans la bande latérale (9) sans revêtement.

3. Vitre transparente (1) avec au moins un revêtement (8) pouvant être chauffé électriquement qui est relié à au moins deux électrodes collectrices (11, 11"') prévues pour le raccordement électrique aux deux pôles d'une source de tension de telle manière qu'un champ de chauffage (12) formé entre les deux électrodes collectrices (11, 11"') circule lorsqu'une tension d'alimentation est appliquée, où le champ de chauffage (12) contient une zone sans revêtement (14) qui est délimitée par une bordure (17) qui est formée au moins par sections, par le revêtement (14) (8) pouvant être chauffé de la zone sans revêtement (14), où
- au moins une des deux électrodes collectrices (11, 11"') est subdivisée en au moins deux zones partielles (11', 11") qui sont séparées l'une de l'autre,
- au moins une ligne d'alimentation (16, 16') est acheminée de chacune des au moins deux zones partielles (11', 11") vers au moins une électrode supplémentaire (15), et où
- ladite au moins une électrode supplémentaire (15) est reliée électriquement aux extrémités desdites au moins deux lignes d'alimentation électrique (16, 16') et à la section (22) de champ de chauffage du champ de chauffage (12) située entre les électrodes collectrices (11, 11'"), et/ou
- ladite au moins une électrode supplémentaire (15) est subdivisée en au moins deux zones partielles (15', 15") séparées l'une de l'autre, où chacune des au moins deux zones partielles (15', 15") est reliée électriquement respectivement à une extrémité d'au moins une ligne d'alimentation en courant (16, 16') ainsi qu'à la section de champ de chauffage (22) du champ de chauffage (12) entre les électrodes collectrices (11, 11"),
**caractérisée en ce que** lesdites au moins deux lignes d'alimentation électrique (16, 16") s'étendent au moins par sections dans la zone sans revêtement (14), **en ce que** lesdites au moins deux lignes d'alimentation électrique (16, 16') sont mises en contact avec les bords latéraux des zones partielles (11', 11") et **en ce que** les deux bords latéraux des deux zones partielles (11', 11") sont disposés l'un en face de l'autre.

4. Vitre transparente (1) selon la revendication 3, où les au moins deux lignes d'alimentation électrique (16, 16') sont disposées en grande partie ou entièrement dans la zone (14) sans revêtement.

5. Vitre transparente (1) selon l'une des revendications 1 à 4, **caractérisée en ce que** chacune des au moins deux zones partielles (11', 11) d'au moins une des électrodes collectrices (11, 11"') est reliée électriquement à une source de tension par au moins un conducteur (18) plat.

6. Vitre transparente (1) selon la revendication 5, **caractérisée en ce que** chacune desdites au moins deux zones partielles (11', 11") est reliée à une source de tension commune par au moins un conducteur plat (18, 18").

7. Vitre transparente (1) selon l'une des revendications 1 à 6, **caractérisée en ce que** ladite au moins une électrode auxiliaire (15) et/ou ladite au moins une zone partielle (15', 15") de ladite au moins une électrode supplémentaire (15) présente au moins deux sections de connexion (21, 21') qui s'étendent dans la zone de champ de chauffage (22) du champ de chauffage (12) entre ladite au moins une électrode supplémentaire (15) et/ou ses au moins deux zones partielles (15', 15") et au moins une électrode collectrice (11, 11"').

8. Vitre transparente (1) selon l'une des revendications 1 à 7, **caractérisée en ce que** lesdites au moins deux lignes d'alimentation électrique (16, 16') sont acheminées par sections à travers la zone supérieure (14') de la zone sans revêtement (14) à l'état monté de la vitre transparente (1).

9. Vitre transparente (1) selon l'une des revendications 1 à 8, **caractérisée en ce que** lesdites au moins deux lignes d'alimentation électrique (16, 16') s'étendent par sections le long des bords latéraux (17', 17") de ladite au moins une zone sans revêtement (14) ou desdites zones sans revêtement (14, 14') à l'état monté de la vitre transparente (1).

10. Vitre transparente (1) selon l'une des revendications 1 à 9, **caractérisée en ce que** ladite au moins une électrode supplémentaire (15) et/ou ses au moins deux zones partielles (15', 15") s'étend ou s'étendent le long du bord de zone (17'") inférieur à l'état monté de la vitre transparente (1).

11. Vitre transparente (1) selon l'une des revendications 1 à 10, **caractérisée en ce que** lesdites au moins deux zones partielles (11', 11") d'au moins une des électrodes collectrices (11, 11'") sont reliées de manière électriquement conductrice par au moins une pièce de raccordement (20, 20') à au moins un conducteur plat (18, 18') relié à une source de tension, où ledit au moins un conducteur plat (18, 18') et ladite au moins une partie de liaison (20, 20') sont isolés électriquement desdits au moins deux conducteurs (16, 16').

12. Vitre transparente (1) selon la revendication 11, **caractérisée en ce que** deux zones partielles (11', 11") sont reliées de manière électriquement conductrice à un conducteur plat (18) par l'intermédiaire d'une pièce de raccordement commune (20).

13. Vitre transparente (1) selon la revendication 11 ou 12, **caractérisée en ce que** l'isolation électrique entre ledit au moins un conducteur plat (18) et ladite au moins une pièce de raccordement (20, 20') d'une part, et lesdites au moins deux lignes d'alimentation (16, 16') d'autre part, est réalisée par une couche électriquement isolante (23) entre ledit au moins un conducteur plat (18) et ladite au moins une pièce de raccordement (20, 20') d'une part, et lesdites au moins deux lignes d'alimentation électrique (16, 16') d'autre part.
